(19) Europäisches Patentamt
European Patent Office
Office européen des brevets

(11) **EP 4 039 756 A1**

(12) **EUROPEAN PATENT APPLICATION**
published in accordance with Art. 153(4) EPC

(43) Date of publication:
**10.08.2022 Bulletin 2022/32**

(21) Application number: **19948049.2**

(22) Date of filing: **04.10.2019**

(51) International Patent Classification (IPC):
**C09D 11/02** (2014.01)      **B41M 1/10** (2006.01)

(52) Cooperative Patent Classification (CPC):
**B41M 1/10; C09D 11/02**

(86) International application number:
**PCT/JP2019/039346**

(87) International publication number:
**WO 2021/064997 (08.04.2021 Gazette 2021/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Kao Corporation**
**Chuo-ku**
**Tokyo 103-8210 (JP)**

(72) Inventors:
• **WATANABE, Kazuki**
**Wakayama-shi, Wakayama 640-8580 (JP)**

• **MIZUSHIMA, Ryuma**
**Wakayama-shi, Wakayama 640-8580 (JP)**
• **OZAKI, Yuki**
**Wakayama-shi, Wakayama 640-8580 (JP)**
• **MATSUZONO, Takuto**
**Wakayama-shi, Wakayama 640-8580 (JP)**
• **UEDA, Yasufumi**
**Wakayama-shi, Wakayama 640-8580 (JP)**

(74) Representative: **Hoffmann Eitle**
**Patent- und Rechtsanwälte PartmbB**
**Arabellastraße 30**
**81925 München (DE)**

(54) **WATER-BASED GRAVURE INK SET**

(57)     The present invention relates to [1] an aqueous gravure ink set including an aqueous gravure ink and an aqueous medium, in which the aqueous gravure ink contains a pigment, a polymer, a water-soluble organic solvent, a surfactant and water, and the aqueous medium contains a polymer, a water-soluble organic solvent, a surfactant and water; a static surface tension of a 1% by mass aqueous mixed solution of the surfactant is not more than 45 mN/m; a mass ratio of [surfactant in aqueous gravure ink/polymer in aqueous gravure ink] is from 0.1 to 0.3; and a mass ratio of [surfactant in aqueous medium/polymer in aqueous medium] is from 0.1 to 0.3, and [2] a process for producing a dilute aqueous gravure ink including the step of compounding the aqueous gravure ink and the aqueous medium with each other. The aqueous gravure ink set of the present invention has a less burden on the environments, and is excellent in leveling properties of ink even when print density is controlled by diluting the ink with a medium to thereby enable production of a high-definition printed material.

EP 4 039 756 A1

**Description**

FIELD OF THE INVENTION

The present invention relates to an aqueous gravure ink set and a process for producing a dilute aqueous gravure ink.

BACKGROUND OF THE INVENTION

Gravure printing is a printing method in which an ink is transferred to a printing substrate using a gravure printing plate on which cells for receiving the ink are formed. The gravure printing is capable of well controlling a print quality of printed images by suitably adjusting a depth of the respective cells and a distance between the cells (screen ruling: the number of screen lines) and thereby capable of conducting high-definition printing, and therefore has been utilized in extensive applications.

As a gravure ink used in the gravure printing, a non-toluene oil-based ink has been conventionally employed for the purpose of improving working environments. However, the non-toluene ink has still failed to reduce a content of volatile organic compounds in the ink and suppress emission of $CO_2$ therefrom, and therefore has posed various problems not only from the standpoint of labor environments and global environments, but also from the standpoint of disaster prevention and further from the standpoint of a residual solvent in the case where the ink is used in food-related applications. For this reason, there is an increasing demand for safe and secure aqueous gravure inks having a less burden on the environments.

On the other hand, although the gravure printing is capable of controlling print density by adjusting a printing plate used therein, the print density tends to vary depending upon printing environments or the number of sheets of paper printed, or the pint density as desired tends to be changed according to designs to be printed. For this reason, in the field of actual printing works, the concentration or color tone of a coloring material has been controlled by adding a pigment-free transparent medium or the other color ink to a gravure ink before the printing, or the concentration of the coloring material has been controlled by adding an additional amount of the medium to the ink during the printing for diluting the coloring material.

For example, JP 2015-101074A (Patent Literature 1) discloses a method of reusing an ink residue in which after conducting a first gravure printing step using a low-concentration ink prepared by diluting an ink (A) with a transparent medium, a second higher-color concentration gravure printing step is conducted using an ink prepared by mixing a residue of the ink (A) with an after-adding ink having a higher concentration than that of the ink (A). In Examples of the Patent Literature 1, there is used a medium based on a mixed solvent that contains ethyl acetate, *n*-propyl acetate and IPA at a mixing ratio of ethyl acetate/*n*-propyl acetate/IPA = 40/40/20.

SUMMARY OF THE INVENTION

The present invention relates to an aqueous gravure ink set including an aqueous gravure ink and an aqueous medium, in which the aqueous gravure ink contains a pigment, a polymer, a water-soluble organic solvent, a surfactant and water, and the aqueous medium contains a polymer, a water-soluble organic solvent, a surfactant and water; a static surface tension of a 1% by mass aqueous mixed solution of the surfactant is not more than 45 mN/m; a mass ratio of the surfactant to the polymer in the aqueous gravure ink [surfactant in aqueous gravure ink/polymer in aqueous gravure ink] is not less than 0.1 and not more than 0.3; and a mass ratio of the surfactant to the polymer in the aqueous medium [surfactant in aqueous medium/polymer in aqueous medium] is not less than 0.1 and not more than 0.3.

DETAILED DESCRIPTION OF THE INVENTION

The ink and the medium described in the Patent Literature 1 are respectively prepared using a mixed solvent as a base, and therefore have the problem of imposing much burden on the environments.

On the other hand, in an ink containing not a low-boiling point solvent but water as a main component, since the water has a high surface tension, the ink has been compounded with a water-soluble organic solvent and a surfactant in addition to a pigment or a polymer in order to improve wettability of the ink to a printing substrate. In the case where the ink whose wettability against the printing substrate is assured by a well-balanced compounding ratio between the pigment, the polymer, the water-soluble organic solvent, the surfactant and water is diluted with a medium in order to control print density thereof, there tends to occur such a problem that a considerable change in wettability of the ink against the printing substrate is caused according to variation of a compounding ratio between respective components in the medium, so that the ink is unable to assure stable wettability against the printing substrate.

For this reason, there is an increasing demand for an ink set including an aqueous gravure ink and a medium which is capable of satisfying sufficient wettability of the ink against the printing substrate, i.e., sufficient wet-spreadability of the ink over the printing substrate (hereinafter also referred to as "leveling properties"), and has a less burden on the environments.

The present invention relates to an aqueous gravure ink set that has a less burden on the environments, and is excellent in leveling properties of ink even when controlling print density by diluting the ink with a medium to thereby enable production of a high-definition printed material; and a process for producing a dilute aqueous gravure ink.

The present inventors have found that the aforementioned conventional problems can be solved by an aqueous gravure ink set that includes an aqueous gravure ink containing a pigment, a polymer, a water-soluble organic solvent, a surfactant and water, and a pigment-free aqueous medium, in which contents of the polymer and the surfactant in the aqueous medium fall within respective specific ranges.

That is, the present invention relates to the following aspects [1] and [2].

[1] An aqueous gravure ink set including an aqueous gravure ink and an aqueous medium, in which:

the aqueous gravure ink contains a pigment, a polymer, a water-soluble organic solvent, a surfactant and water, and the aqueous medium contains a polymer, a water-soluble organic solvent, a surfactant and water;
a static surface tension of a 1% by mass aqueous mixed solution of the surfactant is not more than 45 mN/m;
a mass ratio of the surfactant to the polymer in the aqueous gravure ink [surfactant in aqueous gravure ink/polymer in aqueous gravure ink] is not less than 0.1 and not more than 0.3; and
a mass ratio of the surfactant to the polymer in the aqueous medium [surfactant in aqueous medium/polymer in aqueous medium] is not less than 0.1 and not more than 0.3.

[2] A process for producing a dilute aqueous gravure ink including the step of compounding an aqueous gravure ink and an aqueous medium with each other, in which:

the aqueous gravure ink contains a pigment, a polymer, a water-soluble organic solvent, a surfactant and water, and the aqueous medium contains a polymer, a water-soluble organic solvent, a surfactant and water;
a static surface tension of a 1% by mass aqueous mixed solution of the surfactant is not more than 45 mN/m;
a mass ratio of the surfactant to the polymer in the aqueous gravure ink [surfactant in aqueous gravure ink/polymer in aqueous gravure ink] is not less than 0.1 and not more than 0.3;
a mass ratio of the surfactant to the polymer in the aqueous medium [surfactant in aqueous medium/polymer in aqueous medium] is not less than 0.1 and not more than 0.3; and
the aqueous medium is compounded in an amount of not less than 5 parts by mass and not more than 400 parts by mass on the basis of 100 parts by mass of the aqueous gravure ink.

In accordance with the present invention, it is possible to provide an aqueous gravure ink set that has a less burden on the environments, and is excellent in leveling properties of ink even when print density is controlled by diluting the ink with a medium to thereby enable production of a high-definition printed material; and a process for producing a dilute aqueous gravure ink.

[Aqueous Gravure Ink Set]

The aqueous gravure ink set of the present invention includes an aqueous gravure ink (hereinafter also referred to merely as a "gravure ink" or an "ink") and an aqueous medium, in which:

the aqueous gravure ink contains a pigment, a polymer, a water-soluble organic solvent, a surfactant and water, and the aqueous medium contains a polymer, a water-soluble organic solvent, a surfactant and water;
a static surface tension of a 1% by mass aqueous mixed solution of the surfactant is not more than 45 mN/m;
a mass ratio of the surfactant to the polymer in the aqueous gravure ink [surfactant in aqueous gravure ink/polymer in aqueous gravure ink] is not less than 0.1 and not more than 0.3; and
a mass ratio of the surfactant to the polymer in the aqueous medium [surfactant in aqueous medium/polymer in aqueous medium] is not less than 0.1 and not more than 0.3.

The contents of the respective components in the below-mentioned gravure ink and aqueous medium indicate contents thereof when used in gravure printing. The contents or concentrations of the respective components in the gravure ink of the present invention may be controlled to those used upon the printing, and the thus prepared gravure ink may be directly used for the printing. Alternatively, a base ink prepared previously may be diluted with water, etc., to prepare such an ink in which contents or concentrations of the respective components in the ink are controlled to those used upon the printing.

The gravure ink set of the present invention has a less burden on the environments, and is excellent in leveling properties of ink even when controlling print density by diluting the ink with a medium to thereby enable production of a high-definition printed material. The reason why the above advantageous effects can be obtained by the present invention is considered as follows, though it is not clearly determined yet.

That is, the gravure ink set of the present invention includes an aqueous gravure ink and an aqueous medium, in which both of the aqueous gravure ink and the aqueous medium respectively contain a polymer, a water-soluble organic solvent, a surfactant and water, and the mass ratios of the surfactant to the polymer [surfactant/polymer] in the aqueous gravure ink and the aqueous medium both fall within the range of not less than 0.1 and not more than 0.3. For this reason, it is considered that since the ink in cells of a gravure printing plate is prevented from being dried, high transfer rate of the ink as well as high wettability of the ink against a printing substrate can be maintained, and therefore since the ink can be improved in leveling properties, it is possible not only to obtain a high-definition printed material, but also to reduce a burden on the environments.

[Aqueous Gravure ink]

<Pigment>

The pigment used in the ink of the present invention may be either an inorganic pigment or an organic pigment.

Examples of the inorganic pigment include carbon blacks, metal oxides and the like. The carbon blacks are preferably used for black inks. Examples of the carbon blacks include furnace blacks, thermal lamp blacks, acetylene blacks, channel blacks and the like. As a pigment for white inks, there may be used metal oxides such as titanium dioxide, zinc oxide, silica, alumina, magnesium oxide, etc., and the like. These inorganic pigments may be subjected to surface treatments with conventionally known hydrophobic treatment agents such as a titanium coupling agent, a silane coupling agent, a higher fatty acid metal salt, etc.

Examples of the organic pigment include azo pigments, diazo pigments, phthalocyanine pigments, quinacridone pigments, isoindolinone pigments, dioxazine pigments, perylene pigments, perinone pigments, thioindigo pigments, anthraquinone pigments, quinophthalone pigments and the like.

The hue of these pigments is not particularly limited. In chromatic inks, there may be used any suitable chromatic pigments such as a yellow pigment, a magenta pigment, a cyan pigment, a red pigment, a blue pigment, an orange pigment, a green pigment, etc.

Among these pigments, from the viewpoint of improving leveling properties of the resulting ink, preferred are inorganic pigments, more preferred are metal oxides, and even more preferred is titanium dioxide.

The pigment used in the present invention is preferably in the form of at least one pigment selected from the group consisting of a self-dispersible pigment, and pigment particles formed by dispersing a pigment with a polymer, i.e., polymer particles containing the pigment (hereinafter also referred to merely as "pigment-containing polymer particles"), and more preferably in the form of the pigment-containing polymer particles.

The pigment-containing polymer particles is also preferably in the form of pigment-containing crosslinked polymer particles formed by subjecting the pigment-containing polymer particles to crosslinking treatment as described hereinbelow, i.e., also includes a configuration of the pigment-containing crosslinked polymer particles.

Incidentally, the self-dispersible pigment as used herein means a pigment onto a surface of which at least one hydrophilic group selected from the group consisting of an anionic hydrophilic group and a cationic hydrophilic group is bonded either directly or through the other atom group to thereby render the pigment dispersible in a water-based medium without using a surfactant or a polymer.

<Polymer>

The polymer used in the present invention may be in the form of either a water-soluble polymer or a water-insoluble polymer. Of these polymers, preferred is the water-insoluble polymer.

The water-soluble polymer as used herein means such a polymer that when the polymer is dried to a constant weight at 105° C for 2 hours and then dissolved in 100 g of water at 25° C until reaching a saturation concentration thereof, the solubility in water of the polymer is not less than 10 g. In the case where the water-soluble polymer is in the form of an anionic polymer, the aforementioned solubility means a solubility in water of the polymer whose anionic groups are neutralized completely (i.e., 100%) with sodium hydroxide.

The water-insoluble polymer as used herein means such a polymer that when the polymer is dried to a constant weight at 105° C for 2 hours and then dissolved in 100 g of water at 25° C until reaching a saturation concentration thereof, the solubility in water of the polymer is less than 10 g. The solubility in water of the water-insoluble polymer is preferably not more than 5 g and more preferably not more than 1 g. In the case where the water-insoluble polymer is in the form of an anionic polymer, the aforementioned solubility means a solubility in water of the polymer whose anionic groups are neutralized completely (i.e., 100%) with sodium hydroxide.

Examples of the polymer used herein include polyesters, polyurethanes, vinyl-based polymers and the like. As the polymer, from the viewpoint of improving dispersion stability of the pigment in the resulting ink, preferred are vinyl-based polymers obtained by subjecting a vinyl monomer such as a vinyl compound, a vinylidene compound, a vinylene compound, etc., to addition polymerization. In addition, as the polymer, there may also be used a crosslinked polymer obtained by crosslinking the aforementioned polymer with a crosslinking agent.

The aforementioned polymer used in the present invention is preferably used in the form of pigment-containing polymer particles or pigment-free polymer particles B by dispersing the polymer particles in the gravure ink. In the following, the polymer constituting the pigment-containing polymer particles is also referred to merely as a "polymer a", whereas the polymer constituting the pigment-free polymer particles B is also referred to merely as a "polymer b".

From the viewpoint of improving leveling properties of the resulting gravure ink, the polymer a may be used as a pigment dispersing polymer having a capability of dispersing the pigment in the ink, whereas the polymer b may be used as a fixing aid polymer for fixing the ink onto a printing substrate.

The polymer a may have a composition that is different from that of the polymer b. In addition, the polymers a and b may be identical to each other inclusive of their composition, but may be different from each other merely as to inclusion or non-inclusion of the pigment therein.

In the case where the ink contains both of the pigment-containing polymer particles and the polymer particles B, the content of the polymer in the ink means a total content of the polymer a and the polymer b therein.

The content of the polymer (a total content of the polymer a and the polymer b) in the gravure ink is preferably not less than 3% by mass, more preferably not less than 5% by mass and even more preferably not less than 7% by mass, and is also preferably not more than 30% by mass, more preferably not more than 25% by mass and even more preferably not more than 20% by mass, from the viewpoint of improving dispersibility of the pigment in the resulting ink and fixing properties of the ink.

[Polymer a]

The polymer a is a polymer having a capability of dispersing the pigment in the ink. Examples of such a polymer include a polyester, a polyurethane, a vinyl-based polymer and the like. Among these polymers, from the viewpoint of improving stability of the resulting ink, preferred is the vinyl-based polymer obtained by subjecting a vinyl monomer to addition polymerization.

The vinyl-based polymer preferably contains a constitutional unit derived from (a1) an ionic monomer and a constitutional unit derived from (a2) a nonionic monomer.

The ionic monomer (a1) is preferably in the form of an anionic monomer. Examples of the ionic monomer (a1) include carboxylic acid monomers, sulfonic acid monomers and the like. Among these monomers, preferred are carboxylic acid monomers, and more preferred is at least one monomer selected from the group consisting of acrylic acid and methacrylic acid.

The nonionic monomer (a2) is in the form of a monomer having high affinity to water or a water-soluble organic solvent. As the nonionic monomer (a2), preferred are a polyalkylene glycol (meth)acrylate and an alkoxy polyalkylene glycol (meth)acrylate, and more preferred is methoxy polyethylene glycol (n = 1 to 30) (meth)acrylate. Specific examples of commercially available products of the nonionic monomer include "NK ESTER M" series products available from Shin-Nakamura Chemical Co., Ltd.; "BLEMMER PE" series products, "BLEMMER PME" series products, "BLEMMER 50PEP" series products and "BLEMMER 50POEP" series products all available from NOF Corporation; and the like.

The polymer a may further contain a constitutional unit derived from (a3) a hydrophobic monomer. Examples of the hydrophobic monomer (a3) include alkyl (meth)acrylates, aromatic group-containing monomers, macromonomers containing a polymerizable functional group at one terminal end thereof, and the like.

The alkyl (meth)acrylates are preferably those alkyl (meth)acrylates containing an alkyl group having not less than 6 and not more than 18 carbon atoms. Examples of the alkyl (meth)acrylates include methyl (meth)acrylate, ethyl (meth)acrylate, (iso)propyl (meth)acrylate, (*iso-* or *tert-*)butyl (meth)acrylate, cyclohexyl (meth)acrylate, 2-ethylhexyl (meth)acrylate, (iso)octyl (meth)acrylate and the like.

As the aromatic group-containing monomers, preferred are vinyl-based monomers containing an aromatic group having not less than 6 and not more than 22 carbon atoms, and more preferred are styrene-based monomers, aromatic group-containing (meth)acrylates and the like. Examples of the preferred styrene-based monomers include styrene, 2-methyl styrene, $\alpha$-methyl styrene, vinyl toluene, divinyl benzene and the like. Examples of the preferred aromatic group-containing (meth)acrylates include benzyl (meth)acrylate and the like.

(Contents of Respective Constitutional Units in Polymer a)

The contents of the respective constitutional units derived from the components (a1) to (a3) in the polymer a are as follows from the viewpoint of improving dispersion stability of the resulting ink.

The content of the component (a1) is preferably not less than 5% by mass, more preferably not less than 10% by mass and even more preferably not less than 15% by mass, and is also preferably not more than 40% by mass, more preferably not more than 30% by mass and even more preferably not more than 20% by mass.

The content of the component (a2) is preferably not less than 20% by mass, more preferably not less than 40% by mass and even more preferably not less than 60% by mass, and is also preferably not more than 95% by mass, more preferably not more than 90% by mass and even more preferably not more than 85% by mass.

The content of the component (a3) is preferably not more than 15% by mass, more preferably not more than 10% by mass and even more preferably not more than 5% by mass.

(Production of Polymer a)

The aforementioned polymer a may be produced by copolymerizing a monomer mixture containing the ionic monomer (a1), the nonionic monomer (a2) and the like by a conventionally known solution polymerization method, etc.

The weight-average molecular weight of the polymer a is preferably not less than 3,000, more preferably not less than 5,000 and even more preferably not less than 10,000, and is also preferably not more than 100,000, more preferably not more than 50,000 and even more preferably not more than 30,000, from the viewpoint of improving dispersion stability of the ink and fixing properties of the ink onto a printing substrate.

The acid value of the polymer a is preferably not less than 100 mgKOH/g, more preferably not less than 150 mgKOH/g and even more preferably not less than 200 mgKOH/g, and is also preferably not more than 350 mgKOH/g, more preferably not more than 300 mgKOH/g and even more preferably not more than 250 mgKOH/g, from the viewpoint of improving dispersibility of the pigment and adsorptivity of the polymer.

Meanwhile, the weight-average molecular weight and the acid value may be measured by the respective methods described in Examples below.

(Production of Pigment-Containing Polymer Particles)

The pigment-containing polymer particles are particles that are formed by allowing the polymer a to absorb onto a surface of the pigment, and can be stably dispersed in the ink.

The pigment-containing polymer particles may be efficiently produced in the form of a dispersion thereof by a process including the following step I, and may also be produced by the process further including the following steps II and III.

Step I: subjecting a mixture containing the polymer a, an organic solvent and the pigment, if required together with a neutralizing agent, a surfactant, etc., to dispersion treatment to thereby obtain a dispersion of the pigment-containing polymer particles;

Step II: removing the organic solvent from the dispersion obtained in the step I to thereby obtain a water dispersion of the pigment-containing polymer particles; and

Step III: mixing the dispersion obtained in the step I or the water dispersion obtained in the step II with a crosslinking agent to subject the dispersion or the water dispersion to crosslinking treatment, thereby obtaining a water dispersion of pigment-containing crosslinked polymer particles.

In the case where the polymer a is an anionic polymer, anionic groups contained in the polymer may be neutralized using a neutralizing agent. When using the neutralizing agent, the anionic groups contained in the polymer are preferably neutralized such that the pH value of the obtained dispersion falls within the range of not less than 7 and not more than 11. Examples of the neutralizing agent include bases such as lithium hydroxide, sodium hydroxide, potassium hydroxide, ammonia, various amines and the like. In addition, the polymer may be previously neutralized.

The neutralization degree of the anionic groups contained in the polymer a is preferably not less than 10 mol% and not more than 100 mol%, more preferably not less than 20 mol% and not more than 90 mol% and even more preferably not less than 30 mol% and not more than 80 mol%, on the basis of the anionic groups, from the viewpoint of improving dispersion stability of the resulting ink.

The aforementioned neutralization degree of the polymer a as used herein, if the polymer a contains the anionic groups, may be determined as an equivalent amount of the neutralizing agent used on the basis of the anionic groups contained in the polymer a according to the following formula. When the equivalent amount of the neutralizing agent used is not more than 100 mol%, the equivalent amount of the neutralizing agent used has the same meaning as the neutralization degree of the polymer to be neutralized. On the other hand, when the equivalent amount of the neutralizing agent used exceeds 100 mol%, it means that the neutralizing agent is present in an excessively large amount relative to the acid groups contained in the polymer dispersant (a), and in such a case, the neutralization degree of the polymer dispersant (a) is regarded as being 100 mol%.

Equivalent amount (mol%) of neutralizing agent used = [{mass (g) of neutralizing agent added/equivalent amount of neutralizing agent}/[{weighted mean acid value (mgKOH/g) of polymer dispersant (a) x mass (g) of polymer dispersant (a)}/(56 x 1000)]] x 100.

In the case where the polymer a is in the form of an anionic polymer containing anionic groups, the crosslinking agent is preferably a compound containing a functional group that is capable of reacting with the anionic groups, more preferably a compound containing not less than 2 functional groups that are capable of reacting with the anionic groups in a molecule thereof, and even more preferably a compound containing not less than 2 and not more than 6 functional groups that are capable of reacting with the anionic groups in a molecule thereof.

Examples of the suitable crosslinking agent include a compound containing 2 or more epoxy groups in a molecule thereof, a compound containing 2 or more oxazoline groups in a molecule thereof, and a compound containing 2 or more isocyanate groups in a molecule thereof. Among these compounds, preferred is a compound containing 2 or more epoxy groups in a molecule thereof, and more preferred is trimethylolpropane polyglycidyl ether.

The crosslinking rate of acid components contained in the polymer a is preferably not less than 5 mol%, more preferably not less than 10 mol% and even more preferably not less than 20 mol%, and is also preferably not more than 80 mol%, more preferably not more than 70 mol% and even more preferably not more than 60 mol%, from the viewpoint of improving storage stability of the resulting ink.

The content of the polymer a in the ink is preferably not less than 0.1% by mass, more preferably not less than 0.2% by mass and even more preferably not less than 0.3% by mass, and is also preferably not more than 10% by mass, more preferably not more than 5% by mass and even more preferably not more than 2% by mass, from the viewpoint of improving fixing properties of the resulting ink.

The mass ratio of the polymer a to the pigment [polymer a/pigment] in the ink is preferably from 0.2/99.8 to 70/30, more preferably from 0.5/99.5 to 60/40 and even more preferably from 1/99 to 50/50, from the viewpoint of improving stability of the resulting ink.

Specific examples of commercially available products of the vinyl-based polymer include polyacrylic acids such as "ARON AC-10SL" available from Toagosei Co., Ltd., etc., styrene-acrylic resins such as "JONCRYL 67", "JONCRYL 611", "JONCRYL 678", "JONCRYL 680", "JONCRYL 690" and "JONCRYL 819" all available from BASF Japan, Ltd., etc., and the like.

(Pigment-Free Polymer Particles B)

The gravure ink preferably contains pigment-free polymer particles B (polymer particles B) from the viewpoint of allowing the ink to form a film thereof on a printing substrate to improve fixing properties of the ink onto the printing substrate. The polymer particles B contain no pigment and are in the form of water-insoluble polymer particles formed of a polymer solely.

Examples of a polymer b constituting the polymer particles B include acrylic resins, styrene-based resins, urethane-based resins, polyester-based resins, styrene-acrylic resins, butadiene-based resins, vinyl chloride-based resins, olefin-based resin and the like. Among these resins, from the viewpoint of improving transfer properties of the ink to suppress occurrence of fogging on a printing plate, preferred is at least one resin selected from the group consisting of acrylic resins, styrene-based resins, vinyl chloride-acrylic resins and olefin-based resins, and also preferred is a combination of these resins.

The polymer particles B are preferably used in the form of a water dispersion prepared by dispersing the polymer particles B in water. The polymer particles B used herein may be either an appropriately synthesized product or a commercially available product.

[Polymer b]

The aforementioned acrylic resin is preferably a water-insoluble vinyl-based polymer that is produced by copolymerizing a monomer mixture B containing (b1) an ionic monomer and (b2) a hydrophobic monomer.

Examples of the component (b1) include the same monomers as described above as to the aforementioned component (a1). Among these monomers, from the viewpoint of improving dispersion stability of the resulting ink, preferred are anionic monomers, more preferred are carboxylic acid monomers, and even more preferred is at least one monomer selected from the group consisting of acrylic acid and methacrylic acid.

Examples of the component (b2) include the same alkyl (meth)acrylates, aromatic group-containing monomers and macromonomers as described above as to the aforementioned component (a3), and the like. Among these monomers, preferred are alkyl (meth)acrylates; more preferred are those alkyl (meth)acrylates containing an alkyl group having not less than 1 and not more than 22 carbon atoms and preferably not less than 1 and not more than 10 carbon atoms; even more preferred are those compounds illustrated above; and further even more preferred is a combination of methyl (meth)acrylate and 2-ethylhexyl (meth)acrylate.

(Contents of Respective Constitutional Units in Polymer b)

The contents of the respective constitutional units derived from the components (b1) and (b2) in the polymer b are as follows from the viewpoint of improving fixing properties of the ink onto a printing substrate.

The content of the component (b1) is preferably not less than 1% by mass, more preferably not less than 3% by mass and even more preferably not less than 5% by mass, and is also preferably not more than 30% by mass, more preferably not more than 20% by mass and even more preferably not more than 15% by mass.

The content of the component (b2) is preferably not less than 50% by mass, more preferably not less than 60% by mass and even more preferably not less than 70% by mass, and is also preferably not more than 99% by mass, more preferably not more than 97% by mass and even more preferably not more than 95% by mass.

The polymer b may be produced by copolymerizing a monomer mixture containing the ionic monomer (b1), the nonionic monomer (a2) and the like by a conventionally known solution polymerization method, etc.

Examples of commercially available products of the dispersion of the polymer particles B include dispersions of acrylic resins such as "Neocryl A1127" (anionic self-crosslinkable water-based acrylic resin) available from DSM NeoResins, Inc., "JONCRYL 390" available from BASF Japan, Ltd., etc.; urethane-based resins such as "WBR-2018" and "WBR-2000U" both available from Taisei Fine Chemical Co., Ltd., etc.; styrene-butadiene resins such as "SR-100" and "SR-102" both available from Nippon A & L Inc., etc.; styrene-acrylic resins such as "JONCRYL 7100", "JONCRYL 7600", "JONCRYL 734", "JONCRYL 780", "JONCRYL 537J", "JONCRYL 538J", "JONCRYL PDX-7164" and "JONCRYL PDX-7775" all available from BASF Japan, Ltd., etc.; and vinyl chloride-acrylic resins such as "VINYBLAN 700" and "VINYBLAN 701" both available from Nissin Chemical Co., Ltd., etc., as well as polyolefin wax emulsions such as "AQUACER 497", "AQUACER 507" and "AQUACER 526" (high-density polyethylene wax emulsions) all available from BYK Chemie Japan K.K., etc., and the like.

The weight-average molecular weight of the polymer b is preferably not less than 100,000, more preferably not less than 200,000 and even more preferably not less than 300,000, and is also preferably not more than 2,500,000, more preferably not more than 1,000,000 and even more preferably not more than 600,000, from the viewpoint of improving fixing properties of the resulting ink.

The acid value of the polymer b is preferably not less than 1 mgKOH/g, more preferably not less than 3 mgKOH/g and even more preferably not less than 5 mgKOH/g, and is also preferably not more than 70 mgKOH/g, more preferably not more than 65 mgKOH/g and even more preferably not more than 60 mgKOH/g, from the viewpoint of improving stability of the resulting ink.

Meanwhile, the weight-average molecular weight and the acid value of the polymer b may be measured by the respective methods described in Examples below.

The content of the polymer particles B in the ink is preferably not less than 1% by mass, more preferably not less than 3% by mass and even more preferably not less than 5% by mass, and is also preferably not more than 30% by mass, more preferably not more than 20% by mass and even more preferably not more than 15% by mass, from the viewpoint of improving fixing properties of the resulting ink.

In addition, the average particle size of the polymer particles B in the dispersion or the ink is preferably not less than 10 nm, more preferably not less than 20 nm and even more preferably not less than 30 nm, and is also preferably not more than 300 nm, more preferably not more than 200 nm, even more preferably not more than 150 nm and further even more preferably not more than 130 nm, from the viewpoint of improving stability of the resulting ink.

Meanwhile, the average particle size of the polymer particles B may be measured by the method described in Examples below.

<Water-Soluble Organic Solvent>

The water-soluble organic solvent used in the present invention may be present either in a liquid state or in a solid state at an ordinary temperature (25° C). The water-soluble organic solvent as used herein means an organic solvent having a solubility in water of not less than 10 mL as measured by dissolving the organic solvent in 100 mL of water at 25° C.

The whole amount of the water-soluble organic solvent contained in the ink is preferably not less than 1% by mass, more preferably not less than 2% by mass and even more preferably not less than 4% by mass from the viewpoint of improving leveling properties of the resulting ink, and is also preferably not more than 15% by mass, more preferably not more than 10% by mass, even more preferably not more than 9% by mass and further even more preferably not more than 8% by mass from the viewpoint of reducing a burden on the environments.

The boiling point of the water-soluble organic solvent is preferably not lower than 100° C, more preferably not lower than 120° C and even more preferably not lower than 130° C, and is also preferably not higher than 260° C, more preferably not higher than 240° C and even more preferably not higher than 230° C, from the viewpoint of improving leveling properties of the resulting ink. The boiling point as used herein represents a normal boiling point (boiling point as measured at 1 atm), and in the case where two or more water-soluble organic solvents are used as the aforementioned water-soluble organic solvent, the boiling point of the water-soluble organic solvent is a weighted mean value of boiling points of the two or more water-soluble organic solvents which are weighted by contents (% by mass) of the respective water-soluble organic solvents. The boiling point is hereinafter defined in the same way as described above. Incidentally, the numerical values in the parentheses following the names of respective solvents indicate boiling points (°C) of the solvents.

The water-soluble organic solvent preferably contains a glycol ether having a boiling point of not lower than 100° C and not higher than 260° C from the viewpoint of improving leveling properties of the resulting ink.

The molecular weight of the aforementioned glycol ether is preferably not less than 70, more preferably not less than 80 and even more preferably not less than 100, and is also preferably not more than 200, more preferably not more than 190 and even more preferably not more than 180.

The boiling point of the aforementioned glycol ether is preferably not lower than 110° C, more preferably not lower than 115° C, even more preferably not lower than 120° C and further even more preferably not lower than 130° C, and is also preferably not higher than 240° C, more preferably not higher than 230° C, even more preferably not higher than 220° C, further even more preferably not higher than 200° C and still further even more preferably not higher than 180° C, from the viewpoint of improving leveling properties of the resulting ink.

From the viewpoint of improving leveling properties of the resulting ink, the content of the aforementioned glycol ether in the ink is preferably not less than 1% by mass, more preferably not less than 2% by mass and even more preferably not less than 4% by mass, and is also preferably not more than 12% by mass, more preferably not more than 10% by mass and even more preferably not more than 8% by mass.

The mass ratio of the aforementioned glycol ether to the whole amount of the water-soluble organic solvent [glycol ether/whole amount of water-soluble organic solvent] in the ink is preferably from 5/10 to 10/10, more preferably from 6/10 to 10/10 and even more preferably 7/10 to 10/10.

As the aforementioned glycol ether, from the viewpoint of improving drying properties and leveling properties of the resulting ink, preferred is at least one compound selected from the group consisting of an alkylene glycol monoalkyl ether and an alkylene glycol dialkyl ether, and more preferred is an alkylene glycol monoalkyl ether. More specifically, as the glycol ether, preferred is at least one compound selected from the group consisting of ethylene glycol monomethyl ether, ethylene glycol monoisopropyl ether, ethylene glycol monobutyl ether, diethylene glycol monomethyl ether, diethylene glycol monoisopropyl ether, diethylene glycol monobutyl ether, diethylene glycol monoisobutyl ether, dipropylene glycol monomethyl ether, tripropylene glycol monomethyl ether, diethylene glycol dimethyl ether, diethylene glycol methyl ethyl ether and diethylene glycol diethyl ether; more preferred is at least one compound selected from the group consisting of ethylene glycol monomethyl ether, ethylene glycol monoisopropyl ether, ethylene glycol monobutyl ether, diethylene glycol monomethyl ether, diethylene glycol monoisopropyl ether, diethylene glycol monobutyl ether and diethylene glycol monoisobutyl ether; and even more preferred is at least one compound selected from the group consisting of ethylene glycol monomethyl ether (MG), ethylene glycol monoisopropyl ether (iPG), ethylene glycol monobutyl ether (BG) and diethylene glycol monoisobutyl ether (iBDG).

The water-soluble organic solvent may further contain the other water-soluble organic solvent(s) than the aforementioned glycol ether. Examples of the other water-soluble organic solvent(s) include alcohols, divalent or higher-valent polyhydric alcohols such as glycols, etc., pyrrolidones such as *N*-methyl-2-pyrrolidone, 2-pyrrolidone, etc., alkanol amines, and the like. Of these other water-soluble organic solvents, preferred are glycols from the viewpoint of improving leveling properties of the resulting ink.

The preferred range of the boiling points of the aforementioned glycols is the same as the preferred range of the boiling points of the aforementioned water-soluble organic solvents.

Examples of the glycols include 1,2-alkanediols having not less than 2 and not more than 10 carbon atoms, such as ethylene glycol (197° C), propylene glycol (1,2-propanediol) (188° C), 1,2-butanediol (194° C), 1,2-pentanediol (210° C), 1,2-hexanediol (224° C), 1,2-octanediol (131° C), 1,2-decanediol (255° C), etc.; 1,3-alkanediols having not less than 3 and not more than 8 carbon atoms, such as 1,3-propanediol (230° C), 2-methyl-1,3-propanediol (214° C), 3-methyl-1,3-butanediol (203° C), 2-ethyl-1,3-hexanediol (244° C), etc.; polyalkylene glycols such as dipropylene glycol (231° C), diethylene glycol (244° C), etc.; and the like. These glycols may be used alone or in combination of any two or more thereof. Of these glycols, from the viewpoint of improving drying properties and leveling properties of the resulting ink, preferred are 1,2-alkanediols having not less than 2 and not more than 10 carbon atoms; more preferred are 1,2-alkanediols having not less than 2 and not more than 6 carbon atoms; even more preferred are 1,2-alkanediols having not less than 2 and not more than 4 carbon atoms; and further even more preferred is propylene glycol.

The content of the aforementioned glycol in the ink is preferably not less than 0.5% by mass, more preferably not less than 1% by mass and even more preferably not less than 2% by mass, and is also preferably not more than 8% by mass, more preferably not more than 6% by mass and even more preferably not more than 4% by mass, from the viewpoint of improving leveling properties of the resulting ink.

In the case where the aforementioned glycol ether and glycol are used in combination with each other, the mass ratio of the glycol to the glycol ether [glycol/glycol ether] in the ink is preferably from 10/90 to 70/30, more preferably from 20/80 to 60/40, even more preferably from 30/70 to 50/50 and further even more preferably from 30/70 to 40/60.

The ink may also contain a water-soluble organic solvent having a boiling point lower than 100° C or higher than 260° C. Examples of the water-soluble organic solvent having a boiling point lower than 100° C include monohydric alcohols such as ethanol, 2-propanol (isopropyl alcohol), 1-propanol (*n*-propyl alcohol), etc. Examples of the water-soluble organic solvent having a boiling point higher than 260° C include triethylene glycol (boiling point: 285° C), tripropylene glycol (boiling point: 273° C), glycerin (boiling point: 290° C), and the like.

The content of the water-soluble organic solvent having a boiling point lower than 100° C in the ink is preferably less than 5% by mass, more preferably less than 3% by mass and even more preferably less than 1% by mass from the viewpoint of improving leveling properties of the resulting ink. The lower limit of the content of the water-soluble organic solvent having a boiling point lower than 100° C in the ink is 0% by mass. When the content of the water-soluble organic solvent having a boiling point lower than 100° C in the ink is less than 5% by mass, it is possible to suppress drying of the ink, require no additional amount of the solvent, reduce a content of highly-volatile organic compounds in the ink, and lessen a burden on the environments. The content of the water-soluble organic solvent having a boiling point higher than 260° C in the ink is preferably not more than 5% by mass, more preferably not more than 3% by mass and even more preferably not more than 1% by mass from the viewpoint of improving leveling properties of the resulting ink.

<Surfactant>

The surfactant as used in the present invention means a compound whose static surface tension as measured in a 1% by mass aqueous mixed solution of the compound at 20° C is not more than 45 mN/m.

The static surface tension of the surfactant used in the present invention as measured in a 1% by mass aqueous mixed solution thereof at 20° C is preferably not more than 40 mN/m, more preferably not more than 35 mN/m and even more preferably not more than 32 mN/m, and is also preferably not less than 15 mN/m, more preferably not less than 18 mN/m and even more preferably not less than 20 mN/m, from the viewpoint of improving leveling properties of the resulting ink.

In the present invention, two or more surfactants may be used in the ink. In the case where two or more surfactants are used in the ink, it is preferred that the static surface tension of the respective surfactants as measured in a 1% by mass aqueous mixed solution thereof at 20° C falls within the aforementioned range.

As the surfactant used in the present invention, from the viewpoint of improving wettability of the ink to a printing substrate, preferred is a nonionic surfactant, more preferred is at least one surfactant selected from the group consisting of an acetylene glycol-based surfactant and a silicone-based surfactant, and even more preferred is a combination of an acetylene glycol-based surfactant and a silicone-based surfactant.

Incidentally, the static surface tension of the surfactant may be measured by the method described in Examples below.

As the acetylene glycol-based surfactant, from the viewpoint of improving leveling properties of the resulting ink, preferred are an acetylene glycol having not less than 8 and not more than 22 carbon atoms and ethyleneoxide adducts of the acetylene glycol, and more preferred is the acetylene glycol having not less than 8 and not more than 22 carbon atoms. The number of carbon atoms contained in the aforementioned acetylene glycol is preferably not less than 10 and more preferably not less than 12, and is also preferably not more than 20, more preferably not more than 18 and even more preferably not more than 16. More specifically, as the acetylene glycol-based surfactant, from the viewpoint of improving leveling properties of the resulting ink, there may be mentioned at least one acetylene glycol selected from the group consisting of 2,4,7,9-tetramethyl-5-decyne-4,7-diol, 3,6-dimethyl-4-octyne-3,6-diol and 2,5-dimethyl-3-hexyne-2,5-diol, and ethyleneoxide adducts of these acetylene glycols. Of these compounds, preferred is 2,4,7,9-tetramethyl-5-decyne-4,7-diol.

The HLB value of the acetylene glycol-based surfactant is preferably not less than 0, more preferably not less than 1, even more preferably not less than 2 and further even more preferably not less than 2.5, and is also preferably not more than 5, more preferably not more than 4.5, even more preferably not more than 4 and further even more preferably not more than 3.5.

These acetylene glycol-based surfactants may be used alone or in combination of any two or more thereof.

The term "HLB" (Hydrophile-Lypophile Balance) value as used herein means the value indicating an affinity of the surfactant to water and an oil, and can be calculated according to the following formula by a Griffin method.

$$HLB = 20 \times [(\text{molecular weight of hydrophilic group contained in surfactant})/(\text{molecular weight of surfactant})]$$

As the hydrophilic group contained in the surfactant, there may be mentioned, for example, a hydroxy group and an ethyleneoxy group.

Specific examples of commercially available products of the acetylene glycol-based surfactant include "SURFYNOL 104" (2,4,7,9-tetramethyl-5-decyne-4,7-diol; average molar number of addition of EO: 0; HLB: 3.0), "SURFYNOL 104E" (a 50% ethylene glycol-diluted solution of "SURFYNOL 104"), "SURFYNOL 104PG-50" (a 50% propylene glycol-diluted solution of "SURFYNOL 104") and "SURFYNOL 420" (an EO adduct of "SURFYNOL 104"; average molar number of addition of EO: 1.3; HLB: 4.7) all available from Air Products & Chemicals, Inc., "ACETYLENOL E13T" (average molar number of addition of EO: 1.3; HLB: 4.7) available from Kawaken Fine Chemicals Co., Ltd., and the like.

Examples of the silicone-based surfactant include dimethyl polysiloxane, polyether-modified silicones, amino-modified silicones, carboxy-modified silicones, methylphenyl polysiloxane, fatty acid-modified silicones, alcohol-modified silicones, aliphatic alcohol-modified silicones, epoxy-modified silicones, fluorine-modified silicones, cyclic silicones, alkyl-modified silicones, and the like. Of these silicone-based surfactants, polyether-modified silicones are preferred from the viewpoint of improving wettability of the ink to a printing substrate.

Specific examples of the polyether-modified silicones include PEG-3 dimethicone, PEG-9 dimethicone, PEG-9 PEG-9 dimethicone, PEG-9 methyl ether dimethicone, PEG-10 dimethicone, PEG-11 methyl ether dimethicone, PEG/PPG-20/22 butyl ether dimethicone, PEG-32 methyl ether dimethicone, PEG-9 polydimethylsiloxyethyl dimethicone, lauryl PEG-9 polydimethylsiloxyethyl dimethicone and the like. Of these polyether-modified silicones, especially preferred is PEG-11 methyl ether dimethicone.

Specific examples of commercially available products of the silicone-based surfactant include "KF-6011", "KF-6012", "KF-6013", KF-6015", "KF-6016", "KF-6017", "KF-6028", "KF-6038" and "KF-6043" as silicones all available from Shin-Etsu Chemical Co., Ltd., "TEGO WET 240" and "TEGO WET 270" both available from Evonik Japan Co., Ltd., and the like.

The surfactant may also contain the other surfactant(s) in addition to the aforementioned surfactants. Examples of the preferred other surfactant(s) include at least one surfactant selected from the group consisting of an anionic surfactant, a nonionic surfactant other than the aforementioned surfactants, and an ampholytic surfactant. These other surfactants may be used in combination of any two or more thereof.

Of these other surfactants, preferred is the nonionic surfactant such as an alcohol-based surfactant, etc.

As the alcohol-based surfactant, from the viewpoint of improving wettability of the ink to a printing substrate, preferred is an alkyleneoxide adduct of an alcohol having not less than 6 and not more than 30 carbon atoms. As the alcohol, preferred is a monohydric alcohol. The number of carbon atoms contained in the alcohol is preferably not less than 8, more preferably not less than 10 and even more preferably not less than 12, and is also preferably not more than 24, more preferably not more than 22 and even more preferably not more than 20, from the same viewpoint as described above.

As the alkyleneoxide adduct, from the same viewpoint as described above, preferred are an ethyleneoxide adduct and an ethyleneoxide/propyleneoxide adduct, and more preferred is an ethyleneoxide adduct.

Specific examples of commercially available product of the alcohol-based surfactant include "EMULGEN 108" (HLB: 12.1; average molar number of addition of EO: 6), "EMULGEN 109P" (HLB: 13.6; average molar number of addition of EO: 8), "EMULGEN 120" (HLB: 15.3; average molar number of addition of EO: 13), "EMULGEN 147" (HLB: 16.3; average molar number of addition of EO: 17) and "EMULGEN 150" (HLB: 18.4; average molar number of addition of EO: 44) as ethyleneoxide adducts of lauryl alcohol all available from Kao Corporation, as well as "EMULGEN 707" (an ethyleneoxide adduct of a secondary alcohol having 11 to 15 carbon atoms; HLB: 12.1; average molar number of addition of EO: 6) and "EMULGEN 220" (an ethyleneoxide adduct of a linear primary alcohol having 16 to 18 carbon atoms; HLB: 14.2; average molar number of addition of EO: 13) both available from Kao Corporation, and the like.

(Contents of Respective Components in Aqueous Gravure Ink)

The contents of the pigment, the polymer, the water-soluble organic solvent and the surfactant in the ink are as follows from the viewpoint of improving leveling properties of the resulting ink. The ink as used herein means an ink that is prepared in a ready-to-use state for printing without being diluted, and the below-mentioned contents indicate contents of the respective components in the ink that is kept in such an state.

The content of the pigment in the ink is preferably not less than 2% by mass, more preferably not less than 5% by mass, even more preferably not less than 8% by mass and further even more preferably not less than 10% by mass, and is also preferably not more than 30% by mass, more preferably not more than 25% by mass, even more preferably not more than 20% by mass and further even more preferably not more than 18% by mass.

The content of the pigment-containing polymer particles in the ink is preferably not less than 1% by mass, more preferably not less than 3% by mass, even more preferably not less than 5% by mass and further even more preferably not less than 8% by mass, and is also preferably not more than 35% by mass, more preferably not more than 30% by mass, even more preferably not more than 25% by mass and further even more preferably not more than 20% by mass.

The content of the polymer in the ink is preferably not less than 2% by mass, more preferably not less than 4% by mass and even more preferably not less than 5% by mass, and is also preferably not more than 20% by mass, more preferably not more than 15% by mass and even more preferably not more than 10% by mass.

The mass ratio of the polymer (a total amount of the polymer a and the polymer b) to the pigment [polymer/pigment] in the ink is preferably not less than 0.2, more preferably not less than 0.3 and even more preferably not less than 0.4, and is also preferably not more than 3, more preferably not more than 2 and even more preferably not more than 1, from the viewpoint of improving stability of the resulting ink.

The content of the water-soluble organic solvent in the ink is preferably not less than 2% by mass, more preferably not less than 4% by mass and even more preferably not less than 5% by mass, and is also preferably not more than 15% by mass, more preferably not more than 12% by mass and even more preferably not more than 10% by mass.

The content of the surfactant in the ink is preferably not less than 0.1% by mass, more preferably not less than 0.2% by mass, even more preferably not less than 0.5% by mass and further even more preferably not less than 0.8% by mass, and is also preferably not more than 5% by mass, more preferably not more than 4% by mass and even more preferably not more than 3.5% by mass, from the viewpoint of improving wettability of the ink to a printing substrate.

The content of the acetylene glycol-based surfactant in the ink is preferably not less than 0.3% by mass, more preferably not less than 0.5% by mass and even more preferably not less than 0.7% by mass, and is also preferably not more than 5% by mass, more preferably not more than 4% by mass and even more preferably not more than 3.5% by mass, from the viewpoint of improving wettability of the ink to a printing substrate.

The mass ratio of the acetylene glycol-based surfactant to a total amount of the acetylene glycol-based surfactant and the silicone-based surfactant [acetylene glycol-based surfactant/total amount of surfactants] in the ink is preferably from 0.1 to 1, more preferably from 0.2 to 0.8, and even more preferably from 0.3 to 0.6.

The mass ratio of the surfactant to the polymer in the ink [surfactant in aqueous gravure ink/polymer in aqueous gravure ink] is not less than 0.1 and not more than 0.3 from the viewpoint of improving leveling properties of the resulting ink. The aforementioned mass ratio of the surfactant to the polymer in the ink is preferably not less than 0.12, more preferably not less than 0.14 and even more preferably not less than 0.15, and is also preferably not more than 0.28, more preferably not more than 0.26, even more preferably not more than 0.24 and further even more preferably not more than 0.22.

<Water>

The content of water in the ink is preferably not less than 50% by mass, more preferably not less than 52% by mass and even more preferably not less than 55% by mass from the viewpoint of improving leveling properties of the resulting ink while reducing a content of volatile organic compounds in the ink, and is also preferably not more than 70% by mass, more preferably not more than 68% by mass and even more preferably not more than 65% by mass from the viewpoint of improving leveling properties of the resulting ink while maintaining good drying properties of the ink. In the case where the ink contains the other optional component(s) in addition to the pigment, the polymer, the water-soluble organic solvent, the surfactant and water, the other optional component(s) may be incorporated into the ink by replacing a part of the content of water therewith.

The ink of the present invention may also contain various additives as optional components, such as a pH modifier, a viscosity controller, a defoaming agent, an antiseptic agent, a rust preventive, etc., according to use or applications of the ink.

The Zahn cup viscosity of the ink as measured at 20° C is preferably not less than 10 seconds, more preferably not less than 12 seconds and even more preferably not less than 13 seconds, and is also preferably not more than 25 seconds, more preferably not more than 20 seconds and even more preferably not more than 18 seconds, from the viewpoint of improving leveling properties of the resulting ink. The Zahn cup viscosity may be measured by the method described in Examples below. Incidentally, the aforementioned viscosity represents a viscosity of the ink when used upon gravure printing.

The pH value of the ink as measured at 20° C is preferably not less than 5.5, more preferably not less than 6.0, even more preferably not less than 6.5 and further even more preferably not less than 7.0 from the viewpoint of improving dispersion stability of the resulting ink, and is also preferably not more than 11.0, more preferably not more than 10.5, even more preferably not more than 10.0 and further even more preferably not more than 9.5 from the viewpoint of improving the resistance of members to the ink and suppressing skin irritation. The pH value may be measured by the method described in Examples below.

[Aqueous Medium]

The aqueous medium used in the aqueous gravure ink set of the present invention contains a polymer, a water-soluble organic solvent, a surfactant and water. The aqueous medium is used for diluting the aqueous gravure ink.

The polymer, water-soluble organic solvent, surfactant and water used in the aqueous medium are the same as the polymer, water-soluble organic solvent, surfactant and water used in the aqueous gravure ink, and the kinds of compounds as preferred examples thereof as well as preferred ranges of properties thereof are also the same as those described above for the aqueous gravure ink.

The aqueous medium preferably contains no pigment, but may also contain an extender pigment such as silica, calcium carbonate, talc, etc. In this case, the content of the extender pigment in the aqueous medium is preferably not more than 15% by mass, more preferably not more than 10% by mass and even more preferably not more than 5% by mass.

From the viewpoint of improving leveling properties of the resulting ink, the content of the polymer in the aqueous medium is controlled such that the mass ratio of the content of the polymer in the aqueous medium to the content of the polymer in the aqueous gravure ink [polymer in aqueous medium/polymer in aqueous gravure ink] is preferably not less than 1.1, more preferably not less than 1.2 and even more preferably not less than 1.3, and is also preferably not more than 3.8, more preferably not more than 3.5 and even more preferably not more than 3.2.

From the viewpoint of improving leveling properties of the resulting ink, the content of the water-soluble organic solvent in the aqueous medium is controlled such that the mass ratio of the content of the water-soluble organic solvent in the aqueous medium to the content of the water-soluble organic solvent in the aqueous gravure ink [water-soluble organic solvent in aqueous medium/water-soluble organic solvent in aqueous gravure ink] is preferably not less than 0.5, more preferably not less than 0.7 and even more preferably not less than 0.8, and is also preferably not more than 1.5, more preferably not more than 1.3 and even more preferably not more than 1.2.

The content of the surfactant in the aqueous medium is preferably not less than 0.1% by mass, more preferably not less than 0.5% by mass and even more preferably not less than 0.8% by mass, and is also preferably not more than 5% by mass, more preferably not more than 4% by mass and even more preferably not more than 3.5% by mass, from the viewpoint of improving wettability of the ink to a printing substrate.

In addition, from the viewpoint of improving wettability of the ink to a printing substrate, the content of the surfactant in the aqueous medium is controlled such that the mass ratio of the content of the surfactant in the aqueous medium to the content of the surfactant in the aqueous gravure ink [surfactant in aqueous medium/surfactant in aqueous gravure ink] is preferably not less than 1.0, more preferably not less than 1.2 and even more preferably not less than 1.5, and is also preferably not more than 3.8, more preferably not more than 3.5 and even more preferably not more than 3.2.

The mass ratio of the surfactant to the polymer in the aqueous medium [surfactant in aqueous medium/polymer in aqueous medium] is not less than 0.1 and not more than 0.3 from the viewpoint of improving leveling properties of the resulting ink. The mass ratio of the surfactant to the polymer in the aqueous medium is preferably not less than 0.11, more preferably not less than 0.12 and even more preferably not less than 0.13, and is also preferably not more than 0.28, more preferably not more than 0.26 and even more preferably not more than 0.25.

The difference between a Zahn cup viscosity of the aqueous medium as measured at 20° C and a Zahn cup viscosity of the ink as measured at 20° C is preferably not more than 2 seconds, more preferably not more than 1 second and even more preferably less than 1 second from the viewpoint of improving leveling properties of the resulting ink. The Zahn cup viscosity may be measured by the method described in Examples below. Incidentally, the aforementioned viscosity represents a viscosity of the ink when used upon gravure printing.

The content of water in the aqueous medium is preferably not less than 50% by mass, more preferably not less than 52% by mass and even more preferably not less than 55% by mass from the viewpoint of improving leveling properties of the resulting ink while reducing a content of volatile organic compounds in the ink, and is also preferably not more than 70% by mass, more preferably not more than 68% by mass and even more preferably not more than 65% by mass from the viewpoint of improving leveling properties of the resulting ink while maintaining good drying properties of the ink.

The aqueous medium may also contain various additives as optional components, such as a pH modifier, a defoaming agent, an antiseptic agent, a rust preventive, etc., according to use or applications of the ink.

[Process for Producing Dilute Aqueous Gravure Ink]

The process for producing a dilute aqueous gravure ink according to the present invention includes the step of compounding the aqueous gravure ink and the aqueous medium with each other, in which:

the aqueous gravure ink contains a pigment, a polymer, a water-soluble organic solvent, a surfactant and water, and the aqueous medium contains a polymer, a water-soluble organic solvent, a surfactant and water;

a static surface tension of a 1% by mass aqueous mixed solution of the surfactant is not more than 45 mN/m;

a mass ratio of the surfactant to the polymer in the aqueous gravure ink [surfactant in aqueous gravure ink/polymer in aqueous gravure ink] is not less than 0.1 and not more than 0.3;

a mass ratio of the surfactant to the polymer in the aqueous medium [surfactant in aqueous medium/polymer in aqueous medium] is not less than 0.1 and not more than 0.3; and

the aqueous medium is compounded in an amount of not less than 5 parts by mass and not more than 400 parts by mass on the basis of 100 parts by mass of the aqueous gravure ink.

The amount of the aqueous medium compounded on the basis of the aqueous gravure ink is preferably not less than 8 parts by mass, more preferably not less than 10 parts by mass and even more preferably not less than 15 parts by mass, and is also preferably not more than 400 parts by mass, more preferably not more than 300 parts by mass and even more preferably not more than 200 parts by mass, from the viewpoint of improving leveling properties of the resulting ink.

The method of compounding the aqueous gravure ink and the aqueous medium with each other is not particularly limited.

[Gravure Printing Method]

The aqueous gravure ink set of the present invention can be suitably used for gravure printing using a gravure printing plate. When using the ink of the present invention to print characters or images on a printing substrate by a gravure printing method, it is possible to obtain a high-definition gravure printed material owing to excellent leveling properties of the ink.

The gravure printing is such a printing method as mentioned in detail hereinunder. That is, while rotating a gravure cylinder (a gravure printing plate) having a surface of which recessed cells are formed, the aforementioned ink is supplied over the surface of the gravure cylinder, and scraped off therefrom by a doctor blade fixedly mounted at a predetermined position to allow the ink to remain only within the cells. Then, a printing substrate continuously fed to the gravure cylinder is pressure-contacted to the surface of the gravure cylinder by means of an impression cylinder whose surface is formed of a rubber to transfer only the ink in the cells of the gravure cylinder to the printing substrate and thereby print characters or images on the printing substrate.

It is not necessary to dilute the ink of the present invention with a solvent when using the ink in the gravure printing. Since the upper limit of the whole amount of the water-soluble organic solvents contained in the ink is 15% by mass, the ink of the present invention is capable of reducing a burden on the environments.

(Printing Substrate)

Examples of the printing substrate used in the gravure printing include papers such as a coated paper, an art paper, a synthetic paper, a processed paper, etc.; resin films such as a polyester film, a polyethylene film, a polypropylene film, a polystyrene film, a polyvinyl chloride film, a nylon film, etc.; and the like.

As the printing substrate, preferred is the resin film. In addition, from the viewpoint of improving applicability of the resulting printed material to after-processing treatments such as punching treatment, etc., preferred are a polyester film and a polypropylene film. These resin films may be in the form of either a biaxially oriented film, a monoaxially oriented film or a non-oriented film.

In addition, from the viewpoint of improving gravure printability, there may also be used such a resin film that is subjected to electrical discharge surface treatments such as corona discharge treatment, plasma discharge treatment, etc.

EXAMPLES

The present invention will be described in more detail by referring to the following Examples, etc. In the following Examples, etc., the respective properties were measured by the following methods. Incidentally, the "part(s)" and "%" indicate "part(s) by mass" and "% by mass", respectively, unless otherwise specified.

(1) Measurement of Weight-Average Molecular Weight of Polymer

The weight-average molecular weight of the polymer was measured by gel chromatography [GPC apparatus: "HLC-8320GPC" available from Tosoh Corporation; columns: "TSKgel Super AWM-H", "TSKgel Super AW3000" and "TSKgel guardcolumn Super AW-H" all available from Tosoh Corporation; flow rate: 0.5 mL/min] using a solution prepared by dissolving phosphoric acid and lithium bromide in *N,N*-dimethylformamide such that concentrations of phosphoric acid and lithium bromide in the resulting solution were 60 mmol/L and 50 mmol/L, respectively, as an eluent, and using kits of monodisperse polystyrenes having previously known molecular weights [PStQuick B(F-550, F-80, F-10, F-1, A-1000), PStQuick C(F-288, F-40, F-4, A-5000, A-500] all available from Tosoh Corporation as a reference standard substance.

As a sample to be measured, there was used a dispersion prepared by mixing 0.1 g of the resin with 10 mL of the aforementioned eluent in a glass vial, stirring the resulting mixture with a magnetic stirrer at 25° C for 10 hours, and then subjecting the mixture to filtration treatment through a syringe filter "DISMIC-13HP" (PTFE; 0.2 μm) available from Advantec Co., Ltd.

(2) Measurement of Acid Value of Polymer

In an automatic potentiometric titrator (power burette; "Model No.: APB-610") available from Kyoto Electronics Manufacturing Co., Ltd., the resin was dissolved in a titrant solvent prepared by mixing toluene and acetone (2 + 1), and the resulting solution was subjected to titration with a 0.1N potassium hydroxide/ethanol solution by a potentiometric titration method until reaching an end point of the titration observed as an inflection point of the titration curve. The acid value of the polymer was calculated from an amount (titer) of the potassium hydroxide solution used in the titration until reaching the end point.

(3) Measurement of Solid Contents of Water Dispersion and Emulsion

Using an infrared moisture meter "FD-230" available from Kett Electric Laboratory, 5 g of a sample to be measured was dried at a drying temperature of 150° C under a measuring mode 96 (monitoring time: 2.5 minutes/variation range: 0.05%), and then a water content (%) of the sample to be measured was measured to calculate a solid content thereof according to the following formula.

$$\text{Solid Content (\%)} = 100 - \text{Water Content (\%) of Sample to be Measured}$$

[0062]

(4) Measurement of Average Particle Sizes of Pigment-Containing Polymer Particles and Polymer Particles

The cumulant analysis of the particles was conducted using a laser particle analyzing system "ELS-8000" available from Otsuka Electrics Co., Ltd., to measure an average particle size thereof. In the measurement, there was used a dispersion liquid prepared by diluting a dispersion of the particles to be measured with water such that a concentration of the particles in the resulting dispersion liquid was adjusted to about $5 \times 10^{-3}$% by weight. The measurement was conducted under the conditions including a temperature of 25° C, an angle between incident light and detector of 90° and a cumulative number of 100 times, and a refractive index of water (1.333) was input to the analyzing system as a refractive index of the dispersing medium. The thus measured cumulant average particle size was defined as an average particle size of the pigment-containing polymer particles or the polymer particles.

(5) Measurement of Static Surface Tension of Surfactant

The surfactant to be measured was diluted with ion-exchanged water to prepare an aqueous mixed solution of the surfactant whose concentration was adjusted to 1% by mass.

A platinum plate was dipped in 5 g of the resulting 1% by mass mixed solution of the surfactant which was filled in a cylindrical polyethylene container (3.6 cm in diameter x 1.2 cm in depth), and the static surface tension of the mixed solution was measured at 20° C using a surface tension meter "CBVP-Z" (tradename) available from Kyowa Interface Science Co., Ltd.

As a result, it was confirmed that the static surface tension of the 1% by mass aqueous mixed solution of "SURFYNOL 104PG-50" (active ingredient content: 50%) and the static surface tension of the 1% by mass aqueous mixed solution of "TEGO WET 240" were 29.6 mN/m and 21.0 mN/m, respectively. In addition, it was confirmed that the static surface tension of a mixed solution containing the 1% by mass aqueous mixed solution of "SURFYNOL 104PG-50" (active ingredient content: 50%) and the 0.5% by mass aqueous mixed solution of "TEGO WET 240" was 22.5 mN/m.

Incidentally, although "ADEKANOL UH-420" (active ingredient content: 30%) was not the surfactant used in the present invention, but a thickening agent, the static surface tension of a 1% by mass aqueous mixed solution of "ADEKANOL UH-420" was 48.0 mN/m.

(6) Measurement of Zahn Cup Viscosities of Ink and Medium

The viscosity of the ink or the medium was measured at 20° C using a Zahn cup viscometer (No. 3) available from RIGO Co., Ltd.

(7) Measurement of pH of Ink

The pH value of the ink was measured at 20° C using a bench-top pH meter "F-71" available from Horiba Ltd., equipped with a pH electrode "6337-10D" available from Horiba Ltd.

Production Example A1 (Production of Water Dispersion of Pigment-Containing Crosslinked Polymer Particles)

Two hundred and thirty six parts of ion-exchanged water were weighed and placed in a 2 L-capacity flask, and then 60 parts of a water-insoluble styrene-acrylic polymer "JONCRYL 690" (tradename; weight-average molecular weight: 16500; acid value: 240 mgKOH/g) available from BASF and 36.5 parts of a 5N sodium hydroxide solution (sodium neutralization degree: 60 mol%) were charged into the flask. The contents of the flask were stirred for 2 hours using an anchor blade at 200 rpm, thereby obtaining 332.5 parts of a styrene-acrylic polymer aqueous solution (solid content: 19.9%).

A 2 L-capacity vessel equipped with a disper blade was charged with 331.7 parts of the aforementioned aqueous solution and 448.3 parts of ion-exchanged water, and the contents of the vessel were stirred using a disper "ULTRA DISPER" (tradename) available from Asada Iron Works Co., Ltd., at 1400 rpm for 15 minutes while cooling in a water bath at 0° C.

Next, 220 parts of a cyan pigment (P.B. 15:3) available from DIC Corporation were added to the vessel, and the contents of the vessel were stirred at 6400 rpm for 1 hour. The resulting dispersion liquid was charged into a wet disperser "Ultra Apex Mill UAM05" (tradename) available from HIROSHIMA METAL & MACHINERY Co., Ltd., packed with zirconia beads "XTZ Ball" (tradename; 0.3 mmφ) available from Nikkato Corporation at a packing rate of 80%, and subjected to dispersion treatment by passing the dispersion liquid through the disperser 5 times at a peripheral speed of 8 m/s and a flow rate of 200 g/min while cooling the dispersion liquid with chilled water at 5° C, followed by subjecting the resulting dispersion to filtration treatment through a 200-mesh wire screen.

Added to 500 parts of the above-obtained filtrate (pigment: 110 parts; polymer: 33 parts) were 7.3 parts of "DENACOL EX-321L" (trimethylolpropane polyglycidyl ether; epoxy equivalent: 129) available from Nagase ChemteX Corporation (corresponding to 40 mol% on the basis of a carboxylic acid acting as a crosslinking reaction site contained in an acrylic acid moiety in the polymer) and 1 part of "Proxel LV(S)" (preservative; active ingredient content: 20%) available from LONZA Japan K.K., and 17.9 parts of ion-exchanged water were further added thereto such that a solid content of the resulting dispersion was 28.6%. The obtained dispersion was stirred at 70° C for 3 hours, and then subjected to filtration treatment through a 200-mesh wire screen, thereby obtaining 526.2 parts of a water dispersion of pigment-containing crosslinked polymer particles (content of pigment-containing crosslinked polymer particles: 28.6%; average particle size: 164 nm).

Production Example B1 (Production of Aqueous Gravure Ink B1)

In a production container, 48.0 parts of the pigment water dispersion obtained in Production Example A1 (content of pigment in ink: 11.5 parts; content of pigment-containing polymer particles in ink: 15.6 parts) were mixed with 3.8 parts of a neutralizing agent (a 1 N NaOH solution) available from Wako Pure Chemical Industries, Ltd., and 17.8 parts of an acrylic polymer emulsion "JONCRYL PDX-7775" (tradename; content of polymer in ink: 8.0 parts; solid content: 45%; average particle size: 80 nm) available from BASF Japan, Ltd., followed by stirring the contents of the production container at 150 rpm.

Moreover, 7.0 parts of diethylene glycol monoisobutyl ether (boiling point: 220° C) available from Wako Pure Chemical Industries, Ltd., 2.0 parts of an acetylene glycol-based surfactant "SURFYNOL 104PG-50" (tradename; 2,4,7,9-tetramethyl-5-decyne-4,7-diol (HLB: 3.0); a 50% propylene glycol-diluted solution of "SURFYNOL 104") available from Air Products & Chemicals, Inc., 0.5 part of a polyether-modified polysiloxane-based surfactant "TEGO WET 240" (tradename) available from Evonik Japan Co., Ltd., 0.4 part of a thickening agent "ADEKANOL UH-420" (tradename; nonionic polymer surfactant; an aqueous solution having an active ingredient content of 30%) available from ADEKA Corporation, and 20.5 parts of ion-exchanged water were added to the production container, followed by stirring the contents of the production container at room temperature for 30 minutes. Then, the resulting dispersion was subjected to filtration treatment through a stainless steel wire screen (200 mesh), thereby obtaining an aqueous gravure ink (base ink) B1.

Incidentally, the total amount of the respective components compounded was 100 parts.

The Zahn cup viscosity of the resulting aqueous gravure ink B1 as measured at 20° C was 14 seconds (Zahn seconds), and the pH value thereof as measured at 20° C was 7.6.

The results are shown in Table 1. Incidentally, the amounts of the respective components compounded as shown in Table 1 indicate amounts in terms of active ingredient contents thereof, and the total amount of the respective components compounded was 100 parts.

Production Example A2 (Production of Water Dispersion of Polymer Particles)

In a 500 mL plastic container, 200 g of a styrene monomer (reagent) available from FUJIFILM Wako Pure Chemical Corporation, 4.8 g of sodium polyoxyethylenealkylethersulfate "LATEMUL E-118B" (tradename; ether sulfate-type nonionic surfactant for emulsion polymerization) available from Kao Corporation, 0.32 g of potassium persulfate (reagent) available from FUJIFILM Wako Pure Chemical Corporation and 110 g of ion-exchanged water were weighed and mixed with each other to thereby prepare 315.1 g of a dropping mixed solution.

In a 1 L flask, 1.2 g of sodium polyoxyethylenealkylethersulfate, 0.08 g of potassium persulfate, 190 g of ion-exchanged water and 15.8 g of a part of the dropping mixed solution were weighted, and the contents of the flask were heated to 80° C using a water bath while replacing an inside atmosphere of the flask with nitrogen. Then, 299.3 g of the remainder of the dropping mixed solution was uniformly added dropwise to the flask through a dropping funnel over 3 hours to subject the contents of the flask to polymerization reaction. Thereafter, the contents of the flask were aged for 1 hour, cooled to room temperature, and then subjected to filtration treatment though a 200 mesh wire screen, thereby obtaining 506.4 g of an emulsion of a polystyrene emulsion polymer having an average particle size of 200 nm (solid content: 39.8%).

Production Example B2 (Production of Aqueous Gravure Ink B2)

The same procedure as in Production Example B1 was repeated except that the acrylic polymer emulsion was replaced with the emulsion of the polystyrene emulsion polymer obtained in Production Example A2, thereby obtaining an aqueous gravure ink B2.

The Zahn cup viscosity of the resulting aqueous gravure ink B2 as measured at 20° C was 14 seconds (Zahn seconds), and the pH value thereof as measured at 20° C was 7.4.

Production Example B3 (Production of Aqueous Gravure Ink B3)

The same procedure as in Production Example B1 was repeated except that the acrylic polymer emulsion was replaced with a wax emulsion "AQUACER 507" (tradename; high-density polyethylene wax emulsion; active ingredient content 35%; average particle size: 50 nm) available from BYK, thereby obtaining an aqueous gravure ink B3.

The Zahn cup viscosity of the resulting aqueous gravure ink B3 as measured at 20° C was 14 seconds (Zahn seconds), and the pH value thereof as measured at 20° C was 7.8.

TABLE 1

|  | Production Example B1 | Production Example B2 | Production Example B3 |
| --- | --- | --- | --- |
| Content (%) of pigment-containing polymer particles in ink | 15.6 | 15.6 | 15.6 |
| Kind of aqueous gravure ink | B1 | B2 | B3 |

(continued)

| | | | Production Example B1 | Production Example B2 | Production Example B3 |
|---|---|---|---|---|---|
| Composition formulated (%) | Polymer | PDX-7775 | 8.0 | | |
| | | PST | | 8.0 | |
| | | AQUACER | | | 8.0 |
| | Organic solvent | iBDG | 7.0 | 7.0 | 7.0 |
| | | PG*1 | 1.0 | 1.0 | 1.0 |
| | Surfactant (active ingredient content) | SF104PG-50 | 1.0 | 1.0 | 1.0 |
| | | TEGOWET 240 | 0.5 | 0.5 | 0.5 |
| | Thickening agent | UH-420 | 0.1 | 0.1 | 0.1 |
| | Neutralizing agent | NaOH | 0.1 | 0.1 | 0.1 |
| | Ion-exchanged water | | Balance | Balance | Balance |
| Zahn cup viscosity (Zahn seconds) | | | 14 | 14 | 14 |
| Mass ratio of [surfactant/polymer] in ink*2 | | | 0.19 | 0.19 | 0.19 |
| Note *1: Propylene glycol derived from SF104PG-50<br>*2: Mass ratio of [content of surfactant in aqueous gravure ink/content of polymer in aqueous gravure ink] | | | | | |

Meanwhile, the details of the respective notations shown in Table 1 are as follows.

- PDX-7775: Acrylic polymer emulsion "JONCRYL PDX-7775" (Production Example B 1)
- PST: Emulsion of polystyrene emulsion polymer (Production Examples A2 and B2)
- AQUACER: High-density polyethylene wax emulsion "AQUACER 507" (Production Example B3)
- iBDG: Diethylene glycol monoisobutyl ether
- PG: Propylene glycol
- SF104PG-50: 50% Propylene glycol-diluted solution of "SURFYNOL 104" (static surface tension of a 1% by mass aqueous mixed solution thereof as measured at 20° C: 29.6 mN/m)
- TEGO240: "TEGO WET240" (static surface tension of a 1% by mass aqueous mixed solution thereof as measured at 20° C: 21.0 mN/m)
- UH-420: "ADEKANOL UH-420" (static surface tension of a 1% by mass aqueous mixed solution thereof as measured at 20° C: 48.0 mN/m)

Preparation Examples 1 to 9 and Comparative Preparation Examples 1 to 4

(Preparation of Aqueous Media A to M)

The same procedure as in Production Example B1 was repeated except that the pigment water dispersion and the neutralizing agent were not used, and the composition and amounts were changed to those shown in Table 2, thereby preparing aqueous media A to M.

Incidentally, the amounts of the respective components compounded as shown in Table 2 indicate amounts in terms of active ingredient contents thereof, and the total amount of the respective components compounded was 100 parts.

TABLE 2

| Composition formulated (%) | | | Preparation Examples | | | | | | | | | Comparative Preparation Examples | | | |
|---|---|---|---|---|---|---|---|---|---|---|---|---|---|---|---|
| | | | 1 | 2 | 3 | 4 | 5 | 6 | 7 | 8 | 9 | 1 | 2 | 3 | 4 |
| Kind of aqueous medium | | | A | B | C | D | E | F | G | L | M | H | I | J | K |
| | Polymer | PDX-7775 | 18.0 | 12.0 | 16.0 | 24.0 | 18.0 | 18.0 | 8.0 | | | 8.0 | 32.0 | 18.0 | 18.0 |
| | | PST | | | | | | | | 18.0 | | | | | |
| | | AQUACER | | | | | | | | | 18.0 | | | | |
| | Organic solvent | iBDG | 7.0 | 7.0 | 7.0 | 7.0 | 7.0 | 7.0 | 7.0 | 7.0 | 7.0 | 7.0 | 7.0 | 7.0 | 7.0 |
| | | PG*1 | 2.0 | 2.0 | 2.0 | 2.0 | 1.5 | 3.0 | 1.0 | 2.0 | 2.0 | 2.0 | 2.0 | 1.0 | 4.0 |
| | Surfactant (active ingredient content) | SF104PG-50 | 2.0 | 2.0 | 2.0 | 2.0 | 1.5 | 3.0 | 1.0 | 2.0 | 2.0 | 2.0 | 2.0 | 1.0 | 4.0 |
| | | TEGOWET 240 | 1.0 | 1.0 | 1.0 | 1.0 | 0.8 | 1.5 | 0.5 | 1.0 | 1.0 | 1.0 | 1.0 | 0.5 | 2.0 |
| | Thickening agent | UH-420 | 0.6 | 0.6 | 0.6 | 0.6 | 0.6 | 0.6 | 1.0 | 0.6 | 0.6 | 0.6 | 0.6 | 0.6 | 0.6 |
| | Neutralizing agent | NaOH | | | | | | | | | | | | | |
| | Ion-exchanged water | | Bal** | Bal** | Bal** | Bal** | Bal** | Bal** | Bal** | Bal** | Bal** | Bal** | Bal** | Bal** | Bal** |
| Zahn cup viscosity (Zahn seconds) | | | 14 | 14 | 14 | 15 | 14 | 14 | 14 | 14 | 14 | 11 | 20 | 13 | 15 |
| Mass ratio of [surfactant/polymer] in medium*3 | | | 0.17 | 0.25 | 0.19 | 0.13 | 0.13 | 0.25 | 0.19 | 0.17 | 0.17 | 0.38 | 0.09 | 0.08 | 0.33 |
| Mas ratio between organic solvents*4 | | | 1.0 | 1.0 | 1.0 | 1.0 | 1.0 | 1.0 | 1.0 | 1.0 | 1.0 | 1.0 | 1.0 | 1.0 | 1.0 |

Note *1: Propylene glycol derived from SF104PG-50
*3: Mass ratio of [content of surfactant in aqueous medium/content of polymer in aqueous medium]
*4: Mass ratio of [water-soluble organic solvent in aqueous medium/water-soluble organic solvent in aqueous gravure ink] Bal**: Balance

EP 4 039 756 A1

19

Examples 1 to 11 and Comparative Examples 1 to 4

The aqueous gravure ink B1 obtained in Production Example B1 was used in combination with each of the aqueous media A to K obtained in the aforementioned Preparation Examples and Comparative Preparation Examples to prepare the following ink sets.

The aqueous media A to K were respectively added to 100 parts of the aqueous gravure ink B1 to obtain dispersions respectively having such a compounding ratio as shown in Table 3, and the resulting dispersions were stirred at 150 rpm for 15 minutes, thereby obtaining aqueous gravure ink sets 1 to 13 for evaluation of ink sets.

The aqueous medium L was added to 100 parts of the aqueous gravure ink B2 to obtain a dispersion having such a compounding ratio as shown in Table 3, and the resulting dispersion was stirred at 150 rpm for 15 minutes, thereby obtaining an aqueous gravure ink set 14 for evaluation of ink sets.

The aqueous medium M was added to 100 parts of the aqueous gravure ink B3 to obtain a dispersion having such a compounding ratio as shown in Table 3, and the resulting dispersion was stirred at 150 rpm for 15 minutes, thereby obtaining an aqueous gravure ink set 15 for evaluation of ink sets.

Using the thus obtained aqueous gravure ink sets 1 to 15, the following printing test was conducted to evaluate leveling properties and print density of the respective ink sets. The results are shown in Table 3.

<Printing Test>

Using the above-obtained respective aqueous gravure ink sets 1 to 15, gravure printing was conducted on a corona discharge-treated surface of an OPP film "FOR-AQ #20" (laminate grade) available from Futamura Chemical Co., Ltd. In the gravure printing, a solid image having a print density of 100% was printed using an electronic engraved plate (number of lines: 175 lines/inch; plate cell depth: 31 $\mu$m) attached to a bench-top gravure printing tester "K PRINTING PROOFER" available from MATSUO SANGYO Co., Ltd., thereby obtaining a printed material.

<Evaluation of Leveling Properties>

The thus printed solid image having a print density of 100% was evaluated for its color unevenness using a handy-type image evaluation system "PIAS-II" available from QEA, Inc. The region of 42.3 $\mu$m in square (i.e., 42.3 $\mu$m in each of longitudinal and lateral directions) of the solid image during the printing was defined as a "tile", and reflection densities of the respective tiles were determined to quantify a standard deviation of the reflection densities of the 2305 tiles into a numerical value as graininess, thereby evaluating leveling properties of the respective ink sets according to the following evaluation ratings.

(Evaluation Ratings)

A: Graininess was not less than 0 and less than 0.3.
B: Graininess was not less than 0.3 and less than 0.5.
C: Graininess was not less than 0.5.

When the evaluation rating is A or B, the ink set can be practically used.

<Evaluation of Print Density>

The print density of the solid image portion having a print density of 100% was measured using a spectrophotometer "SpectroEye" (tradename) available from GretagMacbeth LLC under a density measuring mode (DIN, Abs).

TABLE 3

| | | Examples | | | | | | | | | | | Comparative Examples | | | |
|---|---|---|---|---|---|---|---|---|---|---|---|---|---|---|---|---|
| | | 1 | 2 | 3 | 4 | 5 | 6 | 7 | 8 | 9 | 10 | 11 | 1 | 2 | 3 | 4 |
| No. of ink set | | 1 | 2 | 3 | 4 | 5 | 6 | 7 | 8 | 13 | 14 | 15 | 9 | 10 | 11 | 12 |
| Amount of aqueous ink (part(s)) | | 100 | 100 | 100 | 100 | 100 | 100 | 100 | 100 | 100 | 100 | 100 | 100 | 100 | 100 | 100 |
| Aqueous medium | Kind | A | A | A | B | C | D | E | F | G | L | M | H | I | J | K |
| | (Part(s)) | 20 | 100 | 300 | 20 | 20 | 20 | 20 | 20 | 20 | 20 | 20 | 20 | 20 | 20 | 20 |
| Evaluation | Leveling properties | A | A | A | B | A | A | B | A | A | B | B | C | C | C | C |
| | Graininess | 0.1 | 0.1 | 0.2 | 0.4 | 0.1 | 0.1 | 0.3 | 0.2 | 0.2 | 0.3 | 0.4 | 1.0 | 0.6 | 0.8 | 0.6 |
| | Print density | 2.01 | 1.43 | 0.65 | 1.95 | 2.00 | 2.03 | 1.98 | 2.00 | 1.99 | 1.95 | 1.90 | 1.88 | 1.87 | 1.97 | 1.93 |

As apparently recognized from Table 3, it was confirmed that in the inks of Examples 1 to 11 which were respectively obtained by diluting the aqueous gravure ink with the aqueous medium in order to develop a lighter color than that of the aqueous gravure ink, since the mass ratio of [surfactant in aqueous gravure ink/polymer in aqueous gravure ink] and the mass ratio of [surfactant in aqueous medium/polymer in aqueous medium] thereof both fell within the range of not less than 0.1 and not more than 0.3, it was possible to exhibit low graininess and excellent leveling properties of the resulting printed images, and provide an excellent printed material even upon the light-color printing.

Incidentally, the print density obtained when conducting the printing with the aqueous gravure ink before diluting it with the aqueous medium was 2.23.

On the other hand, it was confirmed that in the inks of Comparative Examples 1 to 4, since the mass ratio of [surfactant in aqueous medium/polymer in aqueous medium] thereof was out of the aforementioned range, the resulting printed images were deteriorated in leveling properties as compared to those obtained by the inks of Examples 1 to 11.

Industrial Applicability

The aqueous gravure ink set of the present invention has a less burden on the environments and is excellent in leveling properties of ink even when controlling a print density thereof by diluting the ink with a medium, and is capable of providing an high-definition printed material.

**Claims**

1.  An aqueous gravure ink set comprising an aqueous gravure ink and an aqueous medium, in which:

    the aqueous gravure ink comprises a pigment, a polymer, a water-soluble organic solvent, a surfactant and water, and the aqueous medium comprises a polymer, a water-soluble organic solvent, a surfactant and water;
    a static surface tension of a 1% by mass aqueous mixed solution of the surfactant is not more than 45 mN/m;
    a mass ratio of the surfactant to the polymer in the aqueous gravure ink [surfactant in aqueous gravure ink/polymer in aqueous gravure ink] is not less than 0.1 and not more than 0.3; and
    a mass ratio of the surfactant to the polymer in the aqueous medium [surfactant in aqueous medium/polymer in aqueous medium] is not less than 0.1 and not more than 0.3.

2.  The aqueous gravure ink set according to claim 1, wherein a difference between a Zahn cup viscosity of the aqueous medium as measured at 20° C and a Zahn cup viscosity of the aqueous gravure ink as measured at 20° C is not more than 2 seconds.

3.  The aqueous gravure ink set according to claim 1 or 2, wherein the pigment is in the form of pigment-containing polymer particles.

4.  The aqueous gravure ink set according to any one of claims 1 to 3, wherein the pigment is in the form of pigment-containing crosslinked polymer particles.

5.  The aqueous gravure ink set according to any one of claims 1 to 4, wherein the water-soluble organic solvent comprises a glycol ether having a boiling point of not lower than 100° C and not higher than 260° C.

6.  The aqueous gravure ink set according to any one of claims 1 to 5, wherein a mass ratio of a content of the water-soluble organic solvent in the aqueous medium to a content of the water-soluble organic solvent in the aqueous gravure ink [water-soluble organic solvent in aqueous medium/water-soluble organic solvent in aqueous gravure ink] is not less than 0.5 and not more than 1.5.

7.  The aqueous gravure ink set according to any one of claims 1 to 6, wherein a mass ratio of a content of the polymer in the aqueous medium to a content of the polymer in the aqueous gravure ink [polymer in aqueous medium/polymer in aqueous gravure ink] is not less than 1.1 and not more than 3.8.

8.  The aqueous gravure ink set according to any one of claims 1 to 7, wherein a mass ratio of a content of the surfactant in the aqueous medium to a content of the surfactant in the aqueous gravure ink [surfactant in aqueous medium/surfactant in aqueous gravure ink] is not less than 1.0 and not more than 3.8.

9.  The aqueous gravure ink set according to any one of claims 1 to 8, wherein the content of the polymer in the aqueous gravure ink is not less than 2% by mass and not more than 20% by mass.

10. The aqueous gravure ink set according to any one of claims 1 to 9, wherein the content of the surfactant in the aqueous gravure ink is not less than 0.1% by mass and not more than 5% by mass.

11. The aqueous gravure ink set according to any one of claims 1 to 10, wherein the surfactants in the aqueous gravure ink and the aqueous medium are respectively at least one surfactant selected from the group consisting of an acetylene glycol-based surfactant and a silicone-based surfactant.

12. A process for producing a dilute aqueous gravure ink comprising the step of compounding an aqueous gravure ink and an aqueous medium with each other, in which:

the aqueous gravure ink comprises a pigment, a polymer, a water-soluble organic solvent, a surfactant and water, and the aqueous medium comprises a polymer, a water-soluble organic solvent, a surfactant and water;
a static surface tension of a 1% by mass aqueous mixed solution of the surfactant is not more than 45 mN/m;
a mass ratio of the surfactant to the polymer in the aqueous gravure ink [surfactant in aqueous gravure ink/polymer in aqueous gravure ink] is not less than 0.1 and not more than 0.3;
a mass ratio of the surfactant to the polymer in the aqueous medium [surfactant in aqueous medium/polymer in aqueous medium] is not less than 0.1 and not more than 0.3; and
the aqueous medium is compounded in an amount of not less than 5 parts by mass and not more than 400 parts by mass on the basis of 100 parts by mass of the aqueous gravure ink.

13. A use of the aqueous gravure ink set according to any one of claims 1 to 11 for gravure printing.

<table>
<tr><td colspan="2" align="center">**INTERNATIONAL SEARCH REPORT**</td><td colspan="2">International application No.<br>PCT/JP2019/039346</td></tr>
</table>

**A. CLASSIFICATION OF SUBJECT MATTER**
Int. Cl. C09D11/02(2014.01)i, B41M1/10(2006.01)i

According to International Patent Classification (IPC) or to both national classification and IPC

**B. FIELDS SEARCHED**

Minimum documentation searched (classification system followed by classification symbols)
Int. Cl. C09D11/00-13/00, B41M1/00-3/18, B41M7/00-9/04, B41F5/00-13/70

Documentation searched other than minimum documentation to the extent that such documents are included in the fields searched
Published examined utility model applications of Japan    1922-1996
Published unexamined utility model applications of Japan    1971-2019
Registered utility model specifications of Japan    1996-2019
Published registered utility model applications of Japan    1994-2019

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2019-116072 A (KAO CORP.) 18 July 2019, claims 1-3, paragraphs [0011], [0019], [0033], [0056], [0057], table 1 (Family: none) | 1-13 |
| A | JP 2018-104637 A (KAO CORP.) 05 July 2018, claims, paragraphs [0008], [0041], [0042], [0061]-[0066], [0074], tables 1-3 & CN 110099992 A (Family: none) | 1-13 |
| A | JP 2015-101074 A (SAKATA INKS KK) 04 June 2015, claim 1, paragraphs [0011]-[0013], [0022], [0023] (Family: none) | 1-13 |

☒ Further documents are listed in the continuation of Box C.    ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>28.10.2019 | Date of mailing of the international search report<br>05.11.2019 |
|---|---|
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**

International application No.

PCT/JP2019/039346

C (Continuation).  DOCUMENTS CONSIDERED TO BE RELEVANT

| Category* | Citation of document, with indication, where appropriate, of the relevant passages | Relevant to claim No. |
|---|---|---|
| A | JP 2016-44282 A (TOYO INK SC HOLDINGS CO., LTD.) 04 April 2016, claim 1, paragraphs [0048], [0049], [0056]-[0061], tables 1-3 (Family: none) | 1-13 |
| A | JP 2008-291072 A (TOYO INK MANUFACTURING CO., LTD.) 04 December 2008, claims 1, 11, paragraphs [0051], [0095], [0117]-[0123], examples 1-3, table 1 (Family: none) | 1-13 |
| A | WO 2019/130704 A1 (TOYO INK SC HOLDINGS CO., LTD.) 04 July 2019, claim 1, paragraphs [0001], [0027], examples 42, 50-67, tables 1-2, 1-3, 2, 5, 5-1 (Family: none) | 1-13 |
| A | JP 2016-176016 A (DNP FINE CHEMICALS CO., LTD.) 06 October 2016, claims 1, 7, paragraphs [0107], [0112], [0123]-[0125], [0134]-[0138], examples 18, 25, table 2 & US 2018/0030298 A1, claims 1, 8, paragraphs [0114], [0119], [0141]-[0146], examples 18, 25, table 2 & EP 3272818 A1 | 1-13 |

Form PCT/ISA/210 (continuation of second sheet) (January 2015)

**EP 4 039 756 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015101074 A